# EUROPEAN PATENT APPLICATION

(11) **EP 3 382 876 A1**
(43) Date of publication of application: **03.10.2018**
(21) Application number: 17181274.6
(22) Date of filing: 13.07.2017
(51) Int. Cl.: H02M 5/22, H02M 5/257, H05B 37/02, H05B 41/42

(54) **A METHOD TO SELECT WHETHER A SERVICE CONNECTED TO A POWER SUPPLY RECEIVES POWER DEPENDING ON WHETHER THAT POWER SUPPLY IS CONTINUOUS OR THERE ARE ONE OR MORE SHORT INTERRUPTIONS**

(30) Priority: 30.03.2017 EP 17164035
(71) Applicant: Roe, Nicholas, Woodford Green, Essex IG8 9HW (GB)
(72) Inventor: Roe, Nicholas, Woodford Green, Essex IG8 9HW (GB)

(57) **Abstract**

A circuit is provided which, when connected in series with a service, allows that service to be powered or unpowered depending on whether the power supply is continuous or it is temporarily interrupted. That is, by switching ON or switching ON-OFF-ON the service will be powered or unpowered.

For instance in a house or hotel bathroom, the circuit can be used to select whether a fan operates when the lights are on. This can be achieved by connecting the lights directly to the single make-or-brake switch and connecting a fan in parallel through the circuit. Then switching ON or ON-OFF-ON would select whether or not the fan operates when the lights are on.

The second example relates to a bedroom or hotel room. The circuit could be used so that if the lights are switched ON, blue lights come on and some seconds later, white lights also come on. If the switch is cycled OFF-ON before the white lights come on, the blue lights come on again but the white lights remain off.

## Description

### 1. General

This invention relates to a method within an electrical circuit which allows a service connected in series with that circuit to be powered or unpowered according to whether power is supplied continuously or whether there are interruptions. By connecting a second service directly to the power supply, and by incorporating the circuit more than once in series or in parallel, multiple services can be controlled from a single make-or-break switch.

Two possible uses are:
(1) retrofitting to existing domestic bathroom/en-suite lighting circuits to control whether an extractor fan operates while still allowing the lights to illuminate normally.
(2) retrofitting to existing domestic lighting circuits to allow a choice of lighting without the necessity to replace the pre-existing ON-OFF switch or wiring to the switch.

### 2. Introduction

The objective of the invention is best illustrated by the example applications mentioned above.

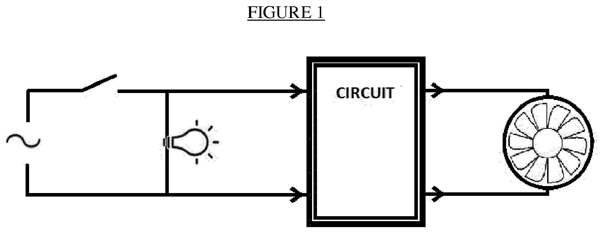

In the first example as illustrated in figure 1, the circuit is added to a domestic en-suite lighting circuit so that if the pull chord light switch is pulled once, the light illuminates and the fan operates. If the chord is subsequently pulled OFF-ON, or if the initial selection is ON-OFF-ON, then only the light illuminates.

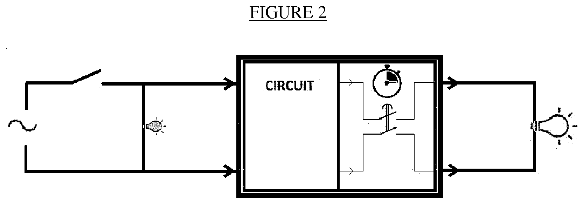

In a second example as illustrated in figure 2, the circuit is added to a domestic bedroom light circuit so that if the light switch is simply selected to ON, blue room lights illuminate and some seconds later a separate set of white lights also illuminate. If the switch is cycled OFF-ON before the white lights illuminate, then the blue lights go off and back on again but the white lights remain off, and do not illuminate regardless of the time until the switch is operated again. In this example, the blue lights would be connected directly to the switch, and another circuit would be connected in parallel which would consist of the circuit in question (incorporating a start delay) connected in series with the white lights.

### 3. The invention

According to the present invention, a method is provided such that an electrical circuit output turns ON when power is applied, and if power to the circuit is not interrupted, the output remains ON. If at any time later power to the circuit is removed and reapplied within a short time, then the circuit output remains OFF. If power to the circuit is removed for substantially longer than the short time just mentioned, then the circuit functionality is reset and it will act as first described.

The invention also allows the ON and OFF to be inverted, i.e. for the output to remain OFF when power is applied; if power is interrupted for a short time, then the circuit output is ON when power to the circuit is reapplied.

The desired effect is achieved electronically using two simple timer sub-circuits with different timings together with a logic sub-circuit. Crucially if power is applied to both timer sub-circuits simultaneously then one of the timers (Timer-slow) will change state after the other (Timer-fast), and will take longer than the other to reset after power is removed. The timer sub-circuits could be achieved with a combination of a resistor/capacitor and Schmitt trigger. The logic sub-circuit is only active when power is applied.

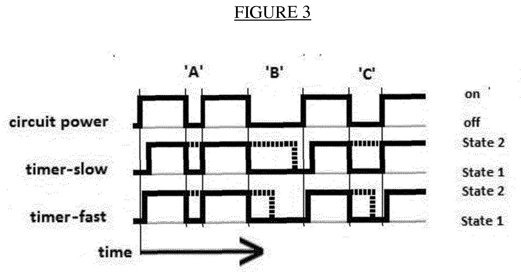

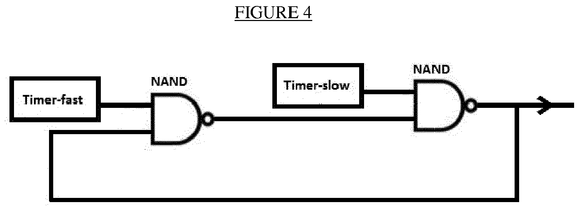

Referring to figure 3, both timer sub-circuits output start at state 1 and switch to state 2 a short time after power is applied. If power is removed and reapplied within a short time they will both immediately be restored to state 2 (illustrated as power interruption 'A'). Note that the dotted lines show the state the timer will attain should power be applied at that time. If power is removed for a longer time, when power is reapplied they attain state 1 and then a short time later state 2 (illustrated as power interruption 'B') i.e., they are re-set and act as first described. The third power interruption on figure 3 (labelled 'C') illustrates the switching function which forms part of the invention. It is short enough for the 'Timer-fast' to have reset, but long enough for the 'Timer-slow' to immediately attain state 2 when power is restored. This causes the logic circuit to change and latch the state of the output (as illustrated in figure 4) [note that, for the purposes of this illustration, state 1 is FALSE and state 2 is TRUE].

### 4. Examples

Specific embodiments of this invention will now be described by way of examples with reference to the accompanying circuit diagrams.

### 4.1 Example 3 - Simple DC Circuit

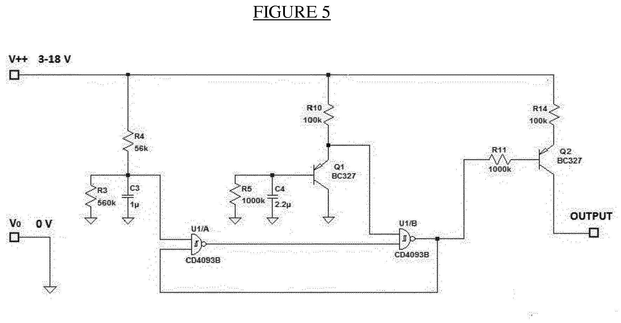

In this example and as illustrated in figure 5, the circuit output is OFF when the circuit is first powered having been unpowered for a substantial time, and remains OFF. If at any later time the power to the circuit is interrupted and re-applied within a short period, then the output remains ON regardless of the time the power is applied to the circuit for the second time.
U1/A and U1/B are Schmitt NAND gates and form a latch. U1/B output becomes low when the circuit output is to be on. When the circuit is powered for the first time, C3 charges through R4 and likewise C4 charges through R10 and Q1. C3 and associated components form the 'Timer-fast'; C4 and associated components the 'Timer-slow'. Q1 and R10 form a voltage follower so that the input to U1/B sees the voltage of C4 (plus a diode voltage drop). This is necessary because if C4 was connected directly to U1 it would discharge quickly through U1 when circuit power was removed. The values of resistors and capacitors are set so that C3 reaches the trigger point of one input to the Schmitt NAND gate U1/A before C4 (seen through Q1) reaches that of U1/B. The output from U1/B is the second input to U1/A and is high on first power-up (as C4 is not charged).
When C3 reaches the trigger point of U1/A, the second input is already high, so the output becomes low. This prevents U1/B output from going low even when C4 (as seen through Q1) reaches the trigger point. As U1/B output is high, PNP transistor Q2 base is held high and the output is off. Thus the circuit output is OFF and remains OFF until power to the circuit is removed.
When the circuit is de-powered, C3 discharges through R3 and R4. C4 is prevented from discharging quickly through R10 due to Q1 which blocks any significant back current, and only discharges slowly through R5. When the circuit is powered for a second time after a short interruption, provided C4 (as seen through Q1) remains above U1/B trigger threshold, when C3 is low and therefore U1/A output is high, both inputs to U1/B are high and its output goes low. This holds U1/A high regardless of C3s state, and thus holds U1/B low as C4 remains charged and so the second input to U1/B remains high. As U1/B is now low, current is drawn through R11 and this causes current to flow through transistor Q2 to the output.

### 4.2 Example 4 - Fully Working Mains Circuit

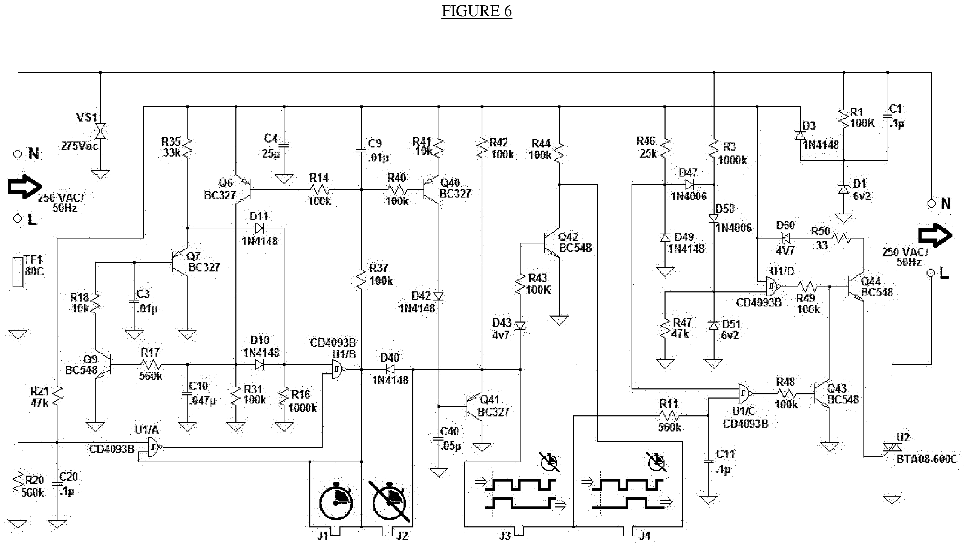

In this example as illustrated at figure 6, the circuit is powered by mains electricity and the circuit output is OFF when the circuit is first powered having been unpowered for a substantial time, and becomes live (ON) after a short period. If, within the time the output goes live or at any time later, power to the circuit is interrupted and re-applied within a short period, then the circuit output remains OFF regardless of the time the power is applied to the circuit for the second time. Any subsequent short power interruptions causes the output to change immediately to the opposite of its previous state and remain in that state until power is removed (i.e. the first time power is applied to the circuit, the output will change state after a short period, but any subsequent short power interruption causes the output to change state immediately power is reapplied and to remain in that state).

The output of the circuit is mains voltage and is switched on and off through a triac. When the output is intended to be ON, the triac is fired for a short time at the beginning of each circuit input voltage half cycle. In this way the power consumed by the circuit itself is reduced relative to that where current is applied continuously to the triac when the output is intended to be ON, and allows a simpler power supply circuit to be used.

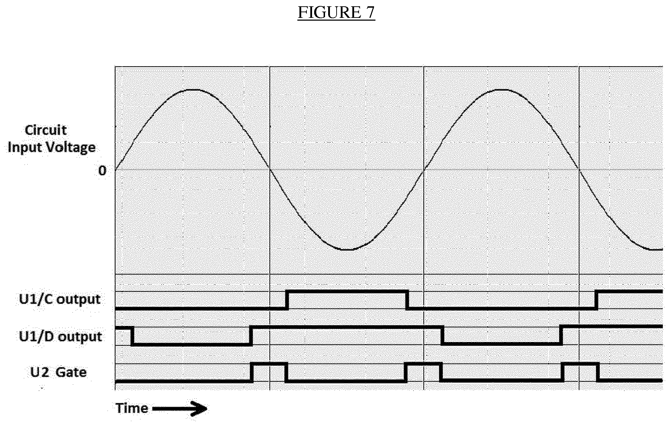

The circuit incorporates the provision of pin selections for (i) no initial delay when J2 is connected; the circuit output immediately goes ON, and subsequent short power interruptions changes the output to the opposite state to that before the interruption (ii) inversion of the output state when J3 is disconnected and J4 connected; i.e. the first time power is applied the output will be ON and will change to OFF after a short period, but any subsequent short power interruption causes the output to change state immediately power is reapplied and to remain in that state. Note that if J2 is also connected (disabling the start delay) then with J4 connected, the first time power is applied the output will be OFF and will remain OFF until there is a power interruption. Short power interruptions changes the output to the opposite state to that before the interruption.
Components R1, D1, D3, C1, and C4 form a conventional low power half wave DC power supply. VS1 is a transient voltage suppressor to minimise the effect of input voltage spikes on the circuit. TF1 is a resetting thermal fuse to remove power from the circuit and output should the temperature in the vicinity of the circuit become excessive.
U1/A and U1/B and associated components work in the same way as described in example 1, although in this case U1/B is high when the output is intended to be on. R21, R20, C20 form the 'Timer-fast'; R35, Q7, C3 form the 'Timer-slow' with a voltage follower. R37, C9 and R14 delay the 'output off' demand (U1/B output going low) for use by the sub-circuits which (i) hold the output demand OFF [so that the Timer-slow can be reset] (ii) reset the 'Timer-slow' [so that the output 'flip-flops' between ON and OFF if a sequence of short circuit power interruptions are made] (iii) inhibits the start delay timer for the second and subsequent circuit power applications. Q6, R31, D10 are added to hold the output demand OFF by holding the second input to U1/B high when U1/B output is low. R18, Q9 and R17 are added to discharge C3 (reset the Timer-slow) when U1/B has already switched to low and is being held low by Q6/R31/D10. R16 ensures the input to U1/B remains low when D10 and D11 are not conducting, and C10 helps switching stability.
In this example, U1/C has two functions. The first is as the start timer to switch on the circuit output if the circuit has been unpowered for a substantial time, and is then powered and remains powered. The second function of U1/C is, in combination with U1/D, to switch off current to the output triac U2 after it has starting conducting near the beginning of each circuit input half cycle. The triac continues to conduct until the circuit input voltage falls at the end of the half cycle to a level where the current flowing through the triac goes below its holding current.
R42, Q41, C40 and U1/C form the start timer. When there is demand for the circuit output to be ON (U1/B is high), C40 fills through Q41 and R42 and when its voltage reaches U1 threshold (as seen through Q41/R11/C11) then U1/C output is able to go low if the second input to U1/C is also high and this allows the circuit output to be on. R11 and C11 prevents spurious spikes which can occur as input power is applied from switching the output on. Q40, R40, R41 and D42 are added to keep C40 charged after the second and subsequent circuit power applications to inhibit the start timer when there is no demand for the circuit output to be ON (U1/B output low). Note that C40 will remain charged when there is demand (U1/B output high) in the same way it charges the first time as described above.
When power is applied to the circuit and there is demand for the circuit output to be on (U1/B is high and the start delay capacitor C40 is full), U1/C output is low, so that Q43 is off and sufficient current flowing through R49 will switch on Q44 turning on the output triac U2.
U1/D provides pulses which can turn on the output triac U2 each circuit input half cycle. Note U1/C and Q43 determine whether that pulse can get through to the output triac U2.
U1/D output is low when the circuit input voltage, appropriately divided by the resistor combination R3/R47, is above U1 trigger threshold. D51 prevents the input going above the maximum allowed for U1, and below ground when the input voltage is negative (should D50 'leak' when there is reverse voltage). Thus U1/D output goes low when the circuit input voltage reaches a positive level (determined by the value of R3/R47), and remains low until the circuit input voltage drops below that value near the end of the circuit input positive half cycle (see figure 7). It remains high throughout the input circuit negative half cycle and becomes low again after each positive half cycle starts when the circuit input voltage rises sufficiently and the cycle repeats. Note that this occurs regardless of whether the circuit output is intended to be on or off; the circuit output state is controlled by U1/C via Q43.
The second function of U1/C is to switch off current to the triac from a short time into the input circuit negative half cycle until shortly before the end. The resistor/diode combination R3, D47, R46, D49 are set so that U1/C output is low throughout the circuit input positive half cycle when there is demand for the circuit output to be on, and remains low until the circuit input voltage is some way below circuit ground. The magnitude of how much lower the voltage is than ground at which U2/C turns on is set by the voltage divider R3/R46, and by adjusting these resistance values and that of R47, the length of the pulse to fire the triac each cycle can be adjusted.
Q44, R49, R50, D60 form the output driver, and the current through the combination switches on the triac U2 at the appropriate time. Zener diode D60 is added so that, if the output is to be on at first power up, the first pulse to U2 at power up is delayed until the DC voltage reaches at least its breakdown voltage. Were it not present, the relatively high current through U2 could prevent the DC voltage reaching a level where the remainder of the circuit functions properly.
By connecting J2, C40 fills directly from U1/B output and the delay between the input power being applied and the output switching on is minimised.
By disconnecting J3 and connecting J4, the signal at R42/Q41 which determines whether the output is to be on or off, is inverted by D43, Q42, R43, R44 before it reaches U1/C. D43 ensures Q42 only turns off after the voltage across C40 reaches the breakdown voltage of Zener diode D43.

### 5. Definitions

### Alternating Current (AC)

Conventional Definition of Alternating Current.

### Direct Current (DC)

Conventional Definition of Direct Current.

### Make-or-Break Switch

A switch containing two conductors in which two possible stable states exist; in one state the conductors are connected together and in the other they are not.

### Service

Any device requiring electricity to operate

### Powered/Power

Having an electrical connection with sufficient capability to allow the item in question to operate/the electricity necessary for the item to operate.

### Switch

Conventional Definition.

### Temporary

Conventional Definition.

### Latch

A circuit in which two possible stable states exist; in one state the output is on and in the other it is off.

### Short (time)

A time similar to that length of time a filament bulb would be illuminated if a make or break switch connect in series with its power supply were manually moved to the ON position and then without delay moved back to the OFF position.

### Amendments

V6.7 Original
V6.8 Figure number corrected line 45
V7.1 'BLUE' deleted from figure 1 Figure 6 updated to include VS1, TF1, D60 and some component values adjusted. Description of second example updated to cover added components and to describe DELAY ON/OFF and START ON/OFF functioning. Typographical errors corrected and clarifications added. Definition of *Short (Time)* amended to avoid possible ambiguity due to 'bounce' of contacts in a switch.
V8.3 Figures removed. Where feasible, wording on figures replaced by pictorial indications. Wording previously on figure 3 added at lines 70-75. Wording between lines 140 and 150 adjusted to accord with figure 6 where wording replaced by pictorial indications. Other references to START ON and START OFF changed to refer to jumper configuration. Working examples at para 4 renumbered as 3 and 4. Line 93 R14 corrected to R10. Line 103 Q3 corrected to Q1. Line 146 ON corrected to OFF in both places. Line 183 Q41 added. Line 240 'triac' corrected to 'zener diode'. Other minor typographical corrections and wording adjustments.

## Claims

1. A method is provided within an electrical circuit which allows a service connected in series with that circuit to be unpowered when the circuit is unpowered, but powered or unpowered depending on whether the power is supplied to the circuit continuously or there are one or more short interruptions.

2. A circuit incorporating the method does not require power other than a small proportion of that being controlled.

3. A circuit incorporating the method does not require a battery.

4. A circuit incorporating the method does not require a transformer

5. A circuit incorporating the method can control direct (DC) or alternating current (AC)

6. A circuit incorporating the method can be configured so that the output is either on or off when power is first applied to the input after a substantial time. Subsequent short power interruptions cause the output to change to the opposite state to that when power was removed from the input.

7. A circuit incorporating the method can be constructed using components commercially available in 2017.

8. A circuit incorporating the method can be constructed using components which do not need to be pre-programmed.

9. A circuit incorporating the method can be constructed on a circuit board which fits through a hole 5 cm diameter.
